## Europäisches Patentamt
## European Patent Office
## Office européen des brevets

(11) Publication number: **0 094 700**
**B1**

(12) **EUROPEAN PATENT SPECIFICATION**

(45) Date of publication of patent specification: **27.08.86**

(21) Application number: **83200594.6**

(22) Date of filing: **25.04.83**

(51) Int. Cl.⁴: **B 60 B 7/00,** B 62 J 6/00

(54) **An elongated reflector for spoked wheels.**

(43) Date of publication of application:
**23.11.83 Bulletin 83/47**

(45) Publication of the grant of the patent:
**27.08.86 Bulletin 86/35**

(84) Designated Contracting States:
**BE DE FR LU NL**

(56) References cited:
**EP-A-0 003 498**
**DE-A-2 750 200**
**US-A-3 834 765**
**US-A-4 285 573**

(73) Proprietor: **Batavus Intercycle B.V.**
**Industrieweg 4**
**NL-8444 AR Heerenveen (NL)**

(72) Inventor: **Oskam, Willem**
**Rak 23**
**NL-8446 MA Heerenveen (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to an elongated reflector in the form of a flexible tube with a light reflective surface, which in conformity with the circumference of a spoked wheel rim with an inflatable tyre, is adapted to be passed between the spokes and which comprises a coupling member adapted to be inserted in at least one tube end and by means of which the two tube ends are detachably interconnectible while the length of the reflector in operative position is shorter than the inner circumference of the wheel rim.

Such a reflector is known from EP—A—No. 0,003,498, in which is disclosed an elongated reflector made of a flexible tube, which is adapted to be passed between the spokes, concentrically with the wheel rim, at a given distance from the inner circumference thereof, while the two ends of the tube are interconnected by means of a plug or sleeve. In this known elongated reflector, the tube, however, has a diameter that is so large that in the operative condition the outer wall of the tube is wedged in between the wheel spokes.

Such a broad tube adversely affects the weight and also the air resistance of the wheel.

It is an object of the invention to provide an elongated reflector having improved properties, which also is adapted to be passed and maintained between the spokes, substantially concentrically with the wheel rim at a given distance from, and hence clear of, the inner circumference thereof.

To this end, according to the invention, a reflector of the above described type is provided which is characterized in that the tube (7) comprises a spring steel wire core (2) and the coupling member comprises aids (8) through which the reflector, via the ends thereof, is detachably connectible to the valve housing (9). This problem is absent in the elongated reflector according to the invention, wherein the tube comprises a spring steel wire core. According to the invention, a small diameter tube, e.g. having an external diameter of about 3 mm, can be conveniently chosen, since the tube, under the influence of the spring tension of the spring steel wire core, is permanently in taut circular form. The application of a small diameter tube has the additional advantage that the space between the spokes, seen in a direction perpendicular to the wheelplane, in general exceeds the tube diameter. In applying the reflector, it can also be passed between the spokes without any difficulty, i.e. without bending backward and forward in slalom fashion. Since furthermore the elongated reflector according to the invention, in the operative condition is adapted to be attached via the coupling member to the valve housing, the reflector, in spite of not being wedged between the spokes, due to the small diameter of the tube, can nevertheless be maintained in floating position at a given distance from the inner circumference of the wheel rim. This floating position of the reflector has two advantages: on the one hand it is achieved that even when the wheel, e.g. of a two-wheel vehicle, such as a bicycle, is illuminated at a very small angle to the longitudinal axis of the bicycle, in other words at an angle of incidence of the incident light (relative to the normal) of nearly 90°, the reflector portion not lying in the tire shadow lights up clearly. On the other hand, the free, floating position ensures that no dirt can accumulate and deposit between the reflector and the wheel rim, which promotes retention of optimal reflection properties.

According to a further embodiment of the elongated reflector according to the invention, the coupling member thereof comprises two rodlike or tubular ends, and the aids of the coupling member advantageously comprise an eye with which the coupling member can be applied about the valve housing. For example, the coupling member may have the form of a wing nut shaped coupling piece having rodlike wings, while the eye is not threaded.

According to the preferred embodiment, however, the coupling member is designed to be integral with the spring steel wire core, the position of which is axially shifted relative to the tube, leaving clear one end thereof extending beyond the corresponding tube end, while the other tube end is not filled with the spring steel wire core along a given distance, the eye being disposed in the portion of the spring steel wire core extending beyond the corresponding tube end at a distance from the end thereof suitable for insertion in the tube end not filled by the spring steel wire core. The combination of the spring steel wire core and the coupling member to one construction element, makes for efficiency in manufacture and for the thus obtained reflector to combine a light weight with ease of installment, thereby providing an effective possibility for attachment to the wheel, so as to avoid sliding movement of the reflector.

One embodiment of the reflector according to the invention adapted to be used in combination with a bicycle wheel, will now be described, by way of example, with reference to the accompanying drawings, in which:

Fig. 1 is a perspective view of a part of a bicycle wheel, comprising a ribbon-shaped reflector according to the invention;

Fig. 2 is also a perspective view of the synthetic plastics tube with reflective outer surface;

Fig. 3 is a perspective view of the spring steel wire core with which the tubular reflector can be connected to the valve housing and the ends of the tubular reflector can be interconnected, and

Fig. 4 is a perspective view of a modified embodiment of the spring steel wire core.

The wheel 1 with hub, not shown, comprises a rim 3 about which the tyre 4 is applied. Conventionally, the rigidity of the wheel has been obtained by means of a system of spokes 5 under tensile stress. The tensile stress can be adjusted by rotation of the spoke nipples, one of which is indicated at 6 by way of example.

At 7 is indicated the reflector, which is designed as a flexible tube of polycarbonate material, comprising a thin light reflective film, which may be of any suitable type and is commercially available. The colour of the reflected light may be selected at will, but is preferably white.

The spring steel wire core 2 imparts to be tubular reflector 7 such a rigidity that it can be passed between and along the spokes 5 and, laid against the spoke nipples 6, presses thereagainst with a certain tension, thus counteracting any sliding movement of the reflector and e.g. in case of the bicycle is in a stationary state, preventing the part of the reflector in the vicinity of the upper portion of the wheel from sliding downwards.

A further coupling of the reflector 7 with the wheel is achieved with the eye 8 of the spring steel wire core 2. Said eye 8 is applied floatingly about the valve housing 9, thereby preventing sliding movement in longitudinal direction of the tube reflector 7 between the spokes. The coupling of the ends of the tubular reflector 7 is formed by the spring steel wire core 2.

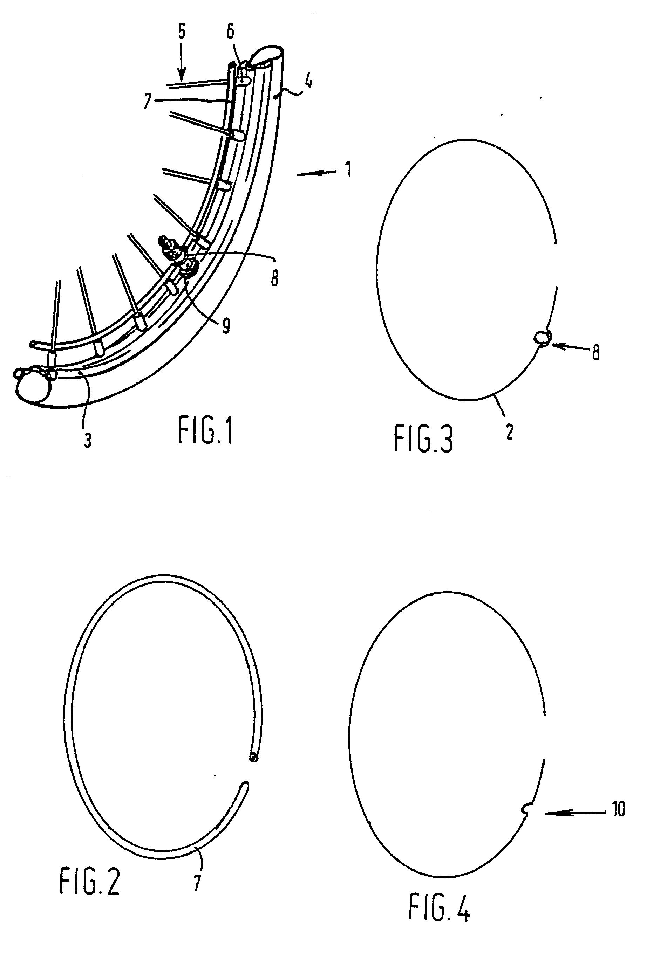

Naturally, modifications may be applied to the reflector as described in the above and shown in the drawings, without departing from the scope of the invention. For instance, Fig. 4 perspectively shows an alternative for the spring steel wire core, the eye being replaced by a semi-eye 10, which, applied about the valve housing also prevents the reflector from moving in longitudinal direction of the wheel.

**Claims**

1. An elongated reflector in the form of a flexible tube (7) with a light reflective surface, which in conformity with the circumference of a spoked wheel rim (3), with an inflatable tyre (4) is adapted to be passed between the spokes (5) and which comprises a coupling member (8) adapted to be inserted in at least one tube end and by means of which the two tube ends are detachably interconnectible while the length of the reflector in operative position is shorter than the inner circumference of the wheel rim (3), characterized in that the tube (7) comprises a spring steel wire core (2) and the coupling member comprises aids (8) through which the reflector, via the ends thereof, is detachably connectible to the valve housing (9).

2. A reflector according to claim 1, in which the coupling member comprises two rodlike or tubular ends insertible in the respective tube ends, characterized in that the aids of the coupling member comprise an eye with which said coupling member can be applied about the valve housing.

3. A reflector according to claim 2, characterized in that the coupling member is integral with the spring steel wire core, the position of which is shifted axially relative to the tube, leaving clear one end thereof extending beyond the corresponding tube end, while the other tube end is not filled with the spring steel wire core along a given distance, and the eye is disposed in the portion of the spring steel wire core extending beyond the corresponding tube end at a distance from the end thereof suitable for insertion in the tube end not filled by the spring steel wire core.

**Patentansprüche**

1. Langgestreckter Reflektor in Form eines Schlauches (7) mit einer Licht reflektierenden Oberfläche, welcher Reflektor entsprechend dem Umfang einer mit Speichen versehenen Felge (3) mit aufblasbarem Reifen (4) zwischen den Speichen (5) hindurchgeführt werden kann und ein Kupplungsglied (8) zum Einschieben in wenigstens ein Schlauchende aufweist, durch welches Kupplungsglied die zwei Schlauchenden lösbar miteinander verbunden sind, während die Länge des Reflektors in wirksamer Lage kürzer ist als der Innenumfang der Felge (3), dadurch gekennzeichnet, dass der Schlauch (7) einen Federstahldraht (2) hat und das Kupplungsglied Hilfsmittel (8) aufweist, durch welche der Reflektor, über dessen Enden, lösbar mit dem Ventilgehäuse (9) verbunden ist.

2. Reflektor nach Anspruch 1, bei dem das Kupplungsglied zwei stab- oder röhrenförmige Enden aufweist, die in die jeweiligen Schlauchenden eingeschoben werden können, dadurch gekennzeichnet, dass die Hilfsmittel des Kupplungsgliedes eine Oese aufweisen, mit der dieses Kupplungsglied um das Ventilgehäuse angeordnet werden kann.

3. Reflektor nach Anspruch 2, dadurch gekennzeichnet, dass das Kupplungsglied einstückig mit dem Federstrahldrahtkern ausgebildet ist, dessen Lage achsial zum Schlauch verschoben ist, wobei dessen eines Ende, das sich am korrespondierenden Schlauchende vorbei erstreckt, frei gelassen wird, während das andere Schlauchende über einen bestimmten Abstand nicht mit dem Federstahldrahtkern gefüllt ist und die Oese in dem Teil des Federstahldrahtkernes angeordnet ist, der sich am korrespondierenden Schlauchende vorbei erstreckt über einen Abstand von diesem Ende, der zum Einschieben in das nicht mit dem Federstahldrahtkern gefüllte Schlauchende geeignet ist.

**Revendications**

1. Un réflecteur allongé dans la forme d'un tube flexible 7 ayant une surface réflectrice de lumière, qui, conforme à la circonférence d'une jante de roue à rayons 3 avec un pneu gonflable 4, est aménagé à passer entre les rayons 5 et qui comprend un membre d'accouplement 8, insérable dans au moins une extrémité du tube et à l'aide duquel les deux extrémités du tube sont adaptées à être interconnectées de façon amovible, alors que la longueur du reflecteur en position d'opération est plus courte que la circonférence intérieure de la jante de roue 3, caractérisé en ce que le tube 7 comprend un noyau de fil en acier à ressort 2 et le membre d'accouplement comprend des moyens auxiliaires 8 à l'aide desquels le réflecteur, via ses extrémités, peut être connecté de façon amovible au boîtier de clapet 9.

2. Un réflecteur selon la revendication 1, dans lequel le membre d'accouplement comprend deux extrémités en forme de tige ou tubulaires insérables dans les extrémités du tube respectives, caractérisé en ce que les moyens auxiliaires du membre d'accouplement comprennent un oeil avec lequel ledit membre d'accouplement peut être appliqué autour du boîtier de clapet.

3. Un réflecteur selon la revendication 2, caractérisé en ce que le membre d'accouplement est solidaire du noyau de fil en acier à ressort, dont la position est déplacée axialement par rapport au tube, laissant libre l'une extrémité s'étendant en dehors de l'extrémité du tube correspondante, alors que l'autre extrémité du tube n'est pas remplie du noyau de fil, en acier à ressort sur une certaine distance, et l'oeil est disposé dans la portion du noyau de fil en acier à ressort s'étendant en dehors de l'extrémité du tube correspondante à une distance de son extrémité convenable pour l'insertion dans l'extrémité du tube non remplie par le noyau de fil en acier à ressort.

FIG.1

FIG.3

FIG.2

FIG.4